# EUROPEAN PATENT APPLICATION

(11) **EP 4 488 158 A1**
(43) Date of publication of application: **08.01.2025**
(21) Application number: 23208464.0
(22) Date of filing: 08.11.2023
(51) Int. Cl.: B62M 6/45

(54) **PEDAL CONTROL DEVICE AND METHOD OF CHAINLESS ELECTRIC BICYCLE**

(30) Priority: 07.07.2023 KR 20230088137
(71) Applicant: HL Mando Corporation, Pyeongtaek-si, Gyeonggi-do 17962 (KR)
(72) Inventor: HONG, Kyungho, 16823 Yongin-si, Gyeonggi-do (KR)
(74) Representative: BCKIP Part mbB

(57) **Abstract**

A pedal control device and method for a chainless electric bicycle are provided. A pedal control device includes a detector (10) configured to detect a DC link voltage, a pedal speed, and a wheel speed (S410, S510), and an adjuster (120) configured to adjust at least one of a pedal torque (S620, S630) and a wheel torque based on the pedal speed and the wheel speed (S410, S510), and configured to compare the detected DC link voltage with a target voltage (S610), and further adjust at least one of the pedal torque (S620, S630) and the wheel torque based on a voltage comparison result (S420).

## Description

This application claims priority from Korean Patent Application No. 10-2023-0088137, filed on July 07, 2023.

### TECHNICAL FIELD

The present invention relates to a pedal control device and method for a chainless electric bicycle.

### BACKGROUND

Electric bicycles use electricity to rotate motors to assist people or drive bicycles. The method in which the rotational power of a motor assists a power of a person to drive the wheel by pedaling may be referred as a pedal assistance system (PAS) type method. Alternatively, a method of pulling a handle and driving a wheel using only the power of the motor may be referred to a throttle type method.

In the throttle type method, the electric bicycle is driven only by the power of the motor, so there is no need for pedals like conventional bicycles or a chain to transmit the power of the pedals. However, since people may feel awkward on bicycles without pedals, there are also chainless electric bicycles that charge a battery with the power generated by turning the pedals.

Chainless electric bicycles may identify the rotation speed of the pedal manupuated by an user, and control the speed of the motor in proportion to the rotation speed of the pedal. Since there is no chain attached to the pedal, no load is applied. Therefore, in order to create a pedal load similar to that of a bicycle with a chain, a generator connected to the pedal is controlled. The load on the pedals may be controlled according to the speed of the electric bicycle, so that the user can feel the pedaling feeling similar to that of a regular bicycle with a chain.

Meanwhile, in Europe, products that meet the Electric Power Assist Cycle (EPAC) standard as an electric bicycle standard can utilize existing bicycle infrastructure, and can also receive benefits such as subsidies from some local organizations.

Therefore, it would be desireable for the drive system of an electric bicycle to satisfy EPAC standards.

The EPAC standard is a standard for a driving system that tows an electric bicycle by applying force to the pedals, and the driving system includes pedals. In order for a chainless electric bicycle to meet the EPAC standard, there is required to reach 10 km/h through user operation without a battery, so there is a need for a method to drive a chainless electric bicycle without a battery.

### SUMMARY

It is one object of the present invention to provide a pedal control device and method for a chainless electric bicycle capable of driving the chainless electric bicycle without a battery.

To this end, the present invention provides a control device in accordance with claim 1 and a method in accordance with claim 8.

In accordance with a first aspect of the present invention, there is provided a pedal control device for a chainless electric bicycle including a detector configured to detect a DC link voltage, a pedal speed, and a wheel speed, and an adjuster configured to adjust at least one of a pedal torque and a wheel torque based on the pedal speed and the wheel speed, and configured to compare the detected DC link voltage with a target voltage, and further adjust at least one of the pedal torque and the wheel torque based on a voltage comparison result.

In accordance with a second aspect of the present invention, there is provided a pedal control method for a chainless electric bicycle, in particular, for controlling a drive system of the bicycle, the method including a first adjustment step of detecting a pedal speed and a wheel speed, and adjusting at least one of a pedal torque and a wheel torque based on the pedal speed and the wheel speed, and a second adjustment step of detecting a DC link voltage, comparing the detected DC link voltage with a target voltage, and further adjusting at least one of the pedal torque and the wheel torque based on a voltage comparison result. The method of the second aspect of the invention may be carried out using the control device in accordance with the first aspect of the invention.

In accordance with a third aspect of the invention, a drive system for a chainless electric bicycle may include: a pedal control device according to the first aspect of the invention; a generator electrically connected to the pedal control device, the generator being configured to be driven by and apply a pedal torque to a pedal of the bicycle and provide an electrical direct voltage (DC voltage); a wheel control device electrically connected to the pedal control device through a direct current (DC) link line; and a motor electrically connected to the wheel control device, the motor being configured to drive a wheel of the bicycle at a predefined wheel speed and/or wheel torque. The detector of the pedal control device may be configured to detect the DC link voltage, e.g., as a voltage difference occurring between the pedal control device and the wheel control device. The adjuster of the pedal control device may be configured to adjust the pedal torque based on the pedal speed and the wheel speed by outputting a command current to the generator to vary the pedal torque, and/or to adjust the wheel torque based on the pedal speed and the wheel speed by outputting a command current to the wheel control device to cause the wheel control device to adjust the wheel torque output by the motor. The adjuster of the pedal control device may be further configured to adjust the pedal torque based on the voltage comparison result by outputting a command current to the generator to vary the pedal torque, and/or to adjust the wheel torque based on the voltage comparison result by outputting a command current to the wheel control device to cause the wheel control device to adjust the wheel torque output by the motor.

The pedal control device of the first aspect of the invention, for example, may be configured to cause the drive system of the third aspect of the invention to carry out the method of the second aspect of the invention.

According to the present invention, since a DC link voltage may be maintained stable or constant through DC link voltage control, a separate large capacitor (super capacitor) is not necessarily required, and the electric bicycle may be driven without a separate battery mounted on the electric bicycle.

### BRIEF DESCRIPTION OF THE DRAWINGS

FIG. 1 schematically illustrates a chainless electric bicycle driving system comprising a pedal control device according to an embodiment of the present invention.
FIG. 2 is a diagram for explaining the operation of a pedal control device and a wheel control device according to an embodiment of the present invention.
FIG. 3 is a block diagram briefly explaining a pedal control device according to an embodiment of the present invention.
FIG. 4 is a flowchart of a pedal control method according to an embodiment of the present invention.
FIG. 5 is a diagram for explaining step S410 in more detail according to an embodiment of the present invention.
FIG. 6 is a flowchart to explain step S420 in more detail according to an embodiment of the present invention.
FIG. 7 is a flowchart to explain step S420 in more detail according to another embodiment of the present invention.

### DETAILED DESCRIPTION

In the following description of examples or embodiments of the present invention, reference will be made to the accompanying drawings in which it is shown by way of illustration specific examples or embodiments that can be implemented, and in which the same reference numerals and signs can be used to designate the same or like components even when they are shown in different accompanying drawings from one another. Further, in the following description of examples or embodiments of the present invention, detailed descriptions of well-known functions and components incorporated herein will be omitted when it is determined that the description may make the subject matter in some embodiments of the present invention rather unclear. The terms such as "including", "having", "containing", "constituting" "make up of", and "formed of" used herein are generally intended to allow other components to be added unless the terms are used with the term "only". As used herein, singular forms are intended to include plural forms unless the context clearly indicates otherwise.

Terms, such as "first", "second", "A", "B", "(A)", or "(B)" may be used herein to describe elements of the invention. Each of these terms is not used to define essence, order, sequence, or number of elements etc., but is used merely to distinguish the corresponding element from other elements.

When it is mentioned that a first element "is connected or coupled to", "contacts or overlaps" etc. a second element, it should be interpreted that, not only can the first element "be directly connected or coupled to" or "directly contact or overlap" the second element, but a third element can also be "interposed" between the first and second elements, or the first and second elements can "be connected or coupled to", "contact or overlap", etc. each other via a fourth element. Here, the second element may be included in at least one of two or more elements that "are connected or coupled to", "contact or overlap", etc. each other.

When time relative terms, such as "after," "subsequent to," "next," "before," and the like, are used to describe processes or operations of elements or configurations, or flows or steps in operating, processing, manufacturing methods, these terms may be used to describe non-consecutive or non-sequential processes or operations unless the term "directly" or "immediately" is used together.

In addition, when any dimensions, relative sizes etc. are mentioned, it should be considered that numerical values for an elements or features, or corresponding information (e.g., level, range, etc.) include a tolerance or error range that may be caused by various factors (e.g., process factors, internal or external impact, noise, etc.) even when a relevant description is not specified. Further, the term "may" fully encompasses all the meanings of the term "can".

Hereinafter, it will be described a pedal control device and method for a chainless electric bicycle of the present invention with reference to the attached drawings.

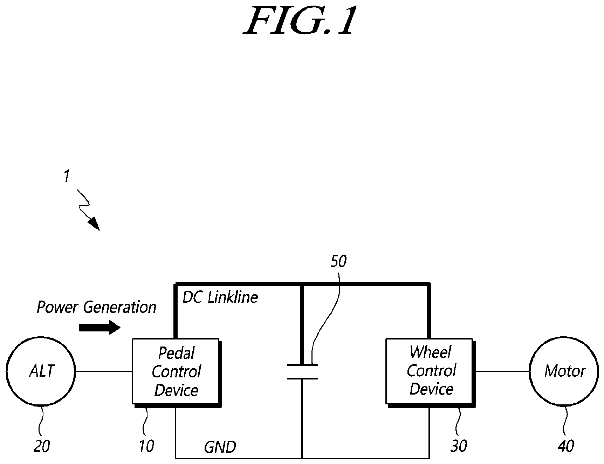

FIG. 1 schematically illustrates a chainless electric bicycle driving system.

Referring to FIG. 1, a drive system 1 for a chainless electric bicycle may include a pedal control device 10, a generator (ALT, 20), a wheel control device 30, a motor 40, and a DC link capacitor 50.

The chainless electric bicycle driving system 1 of the present invention may drive the electric bicycle by maintaining the DC Link voltage constant even without a battery.

The pedal control device 10 may detect a DC link voltage, a pedal speed, and a wheel speed, and may output a first command current for adjusting at least one of a pedal torque and a wheel torque based on the pedal speed and wheel speed. In addition, the pedal control device 10 may compare the detected DC link voltage and a target voltage, and output a second command current for further adjusting at least one of the pedal torque and the wheel torque based on the voltage comparison result.

The wheel control device 30 may receive the first command current from the pedal control device 10 and adjust the wheel torque based on the first command current, and may receive the second command current and adjust the wheel torque based on the second command current.

A motor 40 may be connected to a wheel of the electric bicycle and may be controlled by the wheel control device 30. The motor 40 may receive a command current from the wheel control device 30 and adjust the wheel speed or wheel torque based on the command current.

The DC link capacitor 50 may be connected in parallel with the pedal control device 10 and the wheel control device 30 and may maintain a constant voltage by balancing the instantaneous power difference between the input power and the output load.

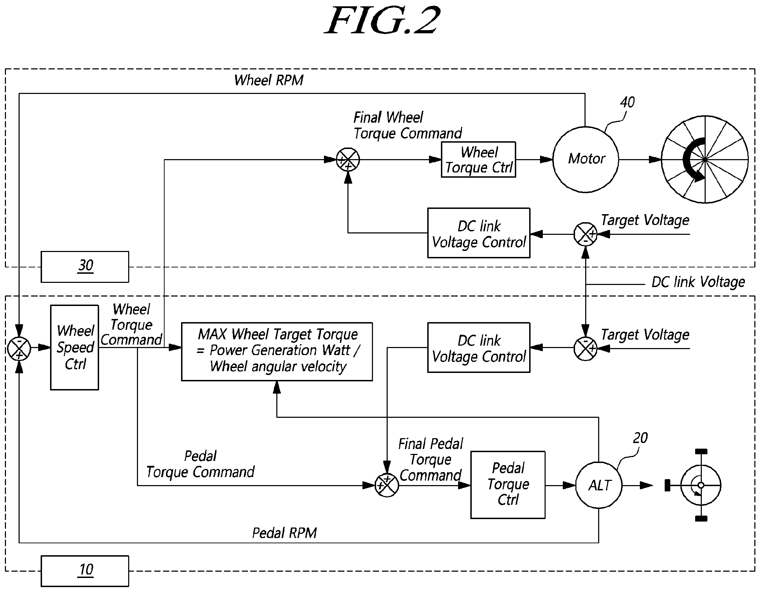

FIG. 2 is a diagram for explaining the operation of the pedal control device 10 and the wheel control device 30.

Referring to FIG. 2, the pedal control device 10 may transmit power generated by the generator 20 to the wheel control device 30. The DC link voltage may be detected as a voltage difference occurring between the pedal control device 10 and the wheel control device 30. The DC link voltage may be the voltage at which power generated by the generator 20 is transmitted to the wheel control device 30 through the pedal control device 10.

Additionally, the pedal control device 10 may receive detection results such as wheel speed and wheel torque through a communication network such as a CAN communication network, and output the first command current or the second command current through the communication network.

The pedal control device 10 may transmit the first command current or the second command current for pedal torque adjustment to a pedal torque control module (Pedal Torque Ctrl). Additionally, the pedal control device 10 may transmit a final pedal torque command current considering both the first command current and the second command current to the pedal torque control module. The pedal torque control module may receive one of the first command current, second command current, and final pedal torque command current, determine a generator torque of the generator 20 corresponding to each command current, and output a third command current for generating the generator torque of the generator 20 to a pedal actuator. The pedal actuator may be operated to generate the generator torque of the generator 20 according to the third command current.

The pedal torque control module may include, for example, a first torque calculation module and a first current control module. The first torque calculation module may determine the generator torque of the generator 20 corresponding to the first command current or the second command current, and the first current control module may output the third command current for generating the generator torque of the generator 20 determined in the first torque calculation module. The first current control module may receive feedback on a generator current of the generator 20 and output the third command current by further considering the feedback result.

Accordingly, the pedal control device 10 may adjust the currently occurring pedal torque to the pedal torque corresponding to each command current by outputting the first command current or the second command current.

The wheel control device 30 may receive a first command current or a second command current to adjust wheel torque. Additionally, the wheel control device 30 may transmit the first command current or the second command current to a wheel torque control module (Wheel Torque Ctrl). Additionally, the wheel control device 30 may transmit a final wheel torque command current considering both the first command current and the second command current to the wheel torque control module.

The wheel torque control module may receive one of the first command current, second command current, and final wheel torque command current, determine a motor torque corresponding to each command current, and output a fourth command current for generating motor torque to a motor actuator. The motor actuator may be operated to generate motor torque according to the fourth command current.

The wheel torque control module may include, for example, a second torque calculation module and a second current control module. The second torque calculation module may determine a motor torque corresponding to the first command current or the second command current, and the second current control module may output a fourth command current to generate the motor torque determined by the second torque calculation module. The second current control module may receive feedback on the motor current and output the fourth command current by further considering the feedback result.

Accordingly, it is possible to prepare for a situation in which the variability of the DC link voltage cannot be controlled due to the limit of the command current speed transmitted as a signal, i.e., a CAN signal from the pedal control device 10 by using an additional wheel torque control module in the wheel control device 30, thereby stably controlling the DC link voltage.

The wheel torque included in the first command current may be determined to be less than a wheel target torque (i.e., the MAX Wheel Target Torque). Here, the wheel target torque may be a value of power (Watt) generated by the generator 20 divided by the wheel angular velocity. The wheel torque limitation due to this wheel target torque is intended to limit motor output that is greater than the energy generated by the pedal.

The pedal control device 10 may compare the pedal speed and the wheel speed, and if the difference between the pedal speed and the wheel speed is greater than or equal to a reference value, the pedal control device 10 may output a first command current for adjusting the wheel torque.

Specifically, the pedal control device 10 may output the first command current so that the pedal torque increases or the wheel torque decreases if the pedal speed is greater than the wheel speed. In addition, the pedal control device 10 may output the first command current so that the pedal torque decreases or the wheel torque increases if the pedal speed is less than the wheel speed. Accordingly, the amount of power generated by pedal torque may be supplied to the wheel control device 30 by maintaining a constant wheel speed or pedal speed.

If the DC link voltage is greater than a target voltage, the pedal control device 10 may output a second command current to reduce pedal torque. In addition, the pedal control device 10 may output a second command current to increase pedal torque if the DC link voltage is lower than the target voltage.

Here, the target voltage may be a predetermined value, and may be a voltage for the motor 40 that rotates the wheel to drive smoothly.

If the DC link voltage is greater than the target voltage, the pedal control device 10 may output a second command current to increase wheel torque. Additionally, the pedal control device 10 may output a second command current to reduce wheel torque if the DC link voltage is lower than the target voltage.

Optionally, the pedal control device 10 and the wheel control device 30 may be implemented as an electronic control unit (ECU). The electronic control unit may include at least one of one or more processors, memory, storage, user interface input, and user interface output, which may communicate with each other through a bus. Additionally, the computer system may also include a network interface for connecting to a network. A processor may be a CPU or a semiconductor device that executes processing instructions stored in memory and/or storage. Memory and storage may include various types of volatile/non-volatile storage media. For example, memory may include ROM and RAM.

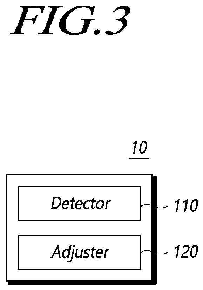

FIG. 3 is a block diagram briefly explaining a pedal control device 10.

Referring to FIG. 3, the pedal control device 10 may include a detector 10 and an adjuster 120.

The detector 10 may detect a DC link voltage, a pedal speed, and a wheel speed.

The detector 10 may include a voltage sensor, a current sensor, a pedal torque sensor, a pedal speed sensor, etc. Additionally, the detector 10 may output the detection results detected from each sensor to the adjuster 120.

For example, the detector 10 may receive a detection result from a sensor not included in the pedal control device 10, and the output the detection result to the adjuster 120. For example, the wheel torque detected by the wheel torque sensor and the wheel speed detected by the wheel speed sensor may be received through a communication network such as CAN communication network and may be output to the adjuster 120.

The adjuster 120 may adjust at least one of pedal torque and wheel torque based on the pedal speed and the wheel speed. In addition, the adjuster 120 may compare the detected DC link voltage and the target voltage and further adjust at least one of the pedal torque and the wheel torque based on the voltage comparison result.

The adjuster 120 may compare the pedal speed and the wheel speed, and if the difference between the pedal speed and the wheel speed is greater than or equal to a reference value, the adjuster 120 may output a first command current for adjusting the pedal torque or wheel torque. For example, if the pedal speed exceeds the wheel speed by at least the reference value, the adjuster 120 may output a first command current to reduce the pedal torque or increase the wheel torque. Accordingly, a stable DC Link voltage may be maintained by keeping the pedal torque or wheel torque constant.

If the DC link voltage is greater than the target voltage, the adjuster 120 may output a second command current to reduce the pedal torque. If the DC link voltage is lower than the target voltage, the adjuster 120 may output a second command current to increase pedal torque.

If the DC link voltage is greater than the target voltage, the adjuster 120 may output a second command current to increase wheel torque. In addition, if the DC link voltage is lower than the target voltage, the adjuster 120 may output a second command current to reduce wheel torque.

Accordingly, according to the present invention, it is possible to adjust the DC link voltage to be closer to the target voltage by adjusting the pedal torque or wheel torque.

The adjuster 120 may control the adjusted wheel torque to be less than or equal to the target wheel torque. Here, the target wheel torque may be set as an amount or a value of power (Watt) generated by the pedal divided by the wheel angular velocity.

Hereinafter, it will be described a pedal control method using the pedal control device 10 of a chainless electric bicycle which performs all of the above-described present invention.

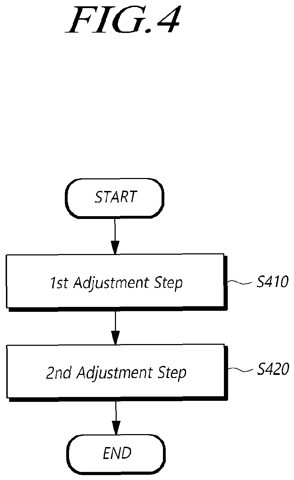

FIG. 4 is a flowchart of a pedal control method.

Referring to FIG. 4, the pedal control method may include a first adjustment step of detecting a pedal speed and a wheel speed, and adjusting at least one of a pedal torque and a wheel torque based on the pedal speed and the wheel speed (S410), and a second adjustment step of detecting a DC link voltage, comparing the detected DC link voltage with a target voltage, and further adjusting at least one of the pedal torque and the wheel torque based on a voltage comparison result (S420).

The first adjustment step may include comparing the pedal speed and wheel speed, and outputting a first command current for adjusting the pedal torque or wheel torque if the difference between the pedal speed and wheel speed is greater than or equal to a reference value.

According to this method, the chainless electric bicycle may be driven with a battery and even without a battery by adjusting the wheel torque or pedal torque in further consideration of the DC link voltage.

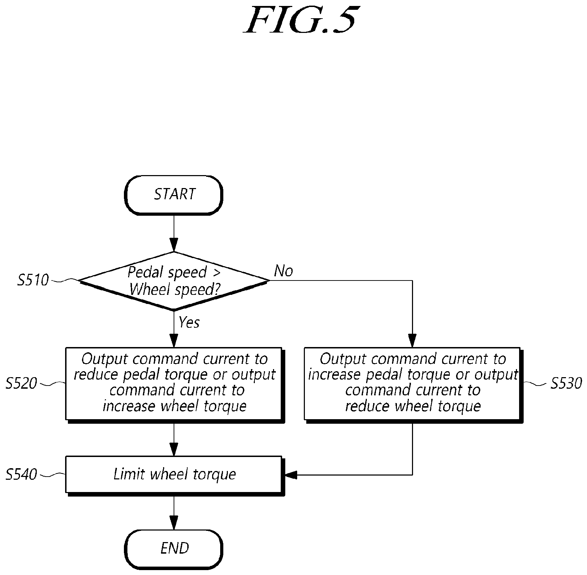

FIG. 5 is a diagram for explaining step S410 in more detail.

Referring to FIG. 5, the pedal control device 10 may determine whether the pedal speed is faster or greater than the wheel speed (S510).

If it is determined that the pedal speed is faster than the wheel speed (Yes in S510), the pedal control device 10 may output a first command current so that the pedal torque decreases or the wheel torque increases (S520). Here, the pedal control device 10 may simultaneously output a first command current so as for the pedal torque to be reduced and a first command current so as for the wheel torque to increases. Accordingly, the first command current for reducing the pedal torque may be transmitted to the pedal torque control module, and the first command current for increasing the wheel torque may be transmitted to the wheel torque control module.

If it is determined that the pedal speed is not faster than the wheel speed (No in S510), the pedal control device 10 may output a first command current so that the pedal torque increases or the wheel torque decreases (S530) . The pedal torque included in the first command current may be determined to be greater than the detected wheel torque.

The pedal control device 10 may determine that the wheel torque value included in the first command current is smaller than the target wheel torque value (S540). The target wheel torque may be the amount of power generated by the generator 20 divided by the wheel angular velocity. Accordingly, the wheel torque value is commanded below a specific torque value, thereby limiting power consumption of the electric bicycle.

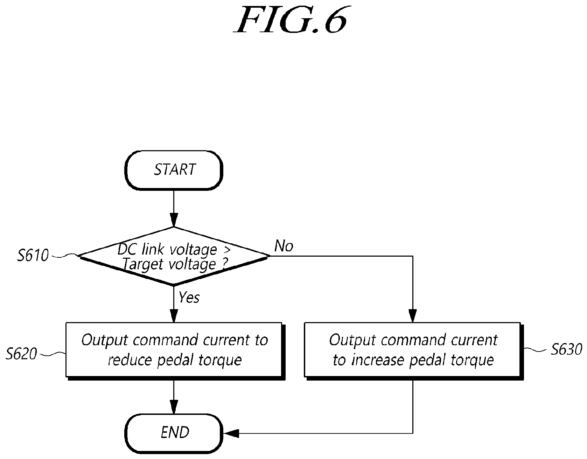

FIG. 6 is a flowchart to explain a procedure that may be carried out in step S420 in more detail.

Referring to FIG. 6, the pedal control device 10 may determine whether the DC link voltage is greater than the target voltage (S610).

If the DC link voltage is greater than the target voltage (Yes in S610), the pedal control device 10 may output a second command current to reduce the pedal torque (S620). Conversely, if the DC link voltage is less than the target voltage (No in S610), the pedal control device 10 may output a second command current to increase the pedal torque (S630).

Here, the second command current may be transmitted to the pedal torque control module.

Following the process explained above, the amount of power generated by the pedal may be adjusted by adjusting the pedal torque, and power may be supplied according to the DC link voltage situation. Accordingly, the electric bicycle driving system 1 can operate even if the battery is not mounted.

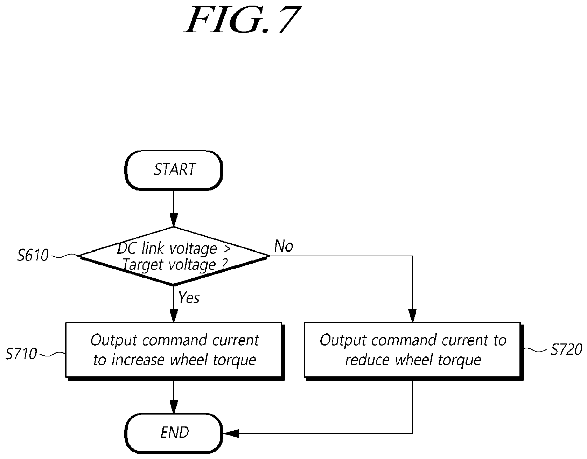

FIG. 7 is a flowchart to explain a procedure that may be carried out in step S420 in more detail.

Referring to FIG. 7, the pedal control device 10 may determine whether the DC link voltage is greater than the target voltage (S610).

If the DC link voltage is greater than the target voltage (Yes in S610), the pedal control device 10 may output a second command current to increase wheel torque (S710). Conversely, if the DC link voltage is lower than the target voltage (No in S610), the pedal control device 10 may output a second command current to reduce wheel torque (S720).

Here, the second command current may be transmitted to the wheel torque control module.

According to the procedure explained above, the amount of power consumed by the motor 40 may be adjusted by adjusting the wheel torque, and power can be consumed according to the DC link voltage situation.

Optionally, the pedal control device 10 may compare the DC link voltage and the target voltage, and simultaneously output a second command current for pedal torque adjustment and a second command current for wheel torque adjustment.

As described above, according to the pedal control device and method for a chainless electric bicycle of the present invention, since a DC link voltage may be maintained stable through DC link voltage control, there is not required a separate large capacitor

(i.e., super capacitor), and the electric bicycle may be driven without a separate battery mounted on the electric bicycle.

The above description has been presented to enable any person skilled in the art to make and use the technical idea of the present invention and has been provided in the context of a particular application and its requirements. Various modifications, additions and substitutions to the described embodiments will be readily apparent to those skilled in the art, and the general principles defined herein may be applied to other embodiments and applications without departing from the scope of the present invention as set out in the appended claims. The above description and the accompanying drawings provide an example of the technical idea of the present invention for illustrative purposes only. That is, the disclosed embodiments are intended to illustrate the technical idea of the present invention. Thus, the scope of the present invention is not limited to the embodiments shown but is defined in the claims.

## Claims

1. A pedal control device (10) for a chainless electric bicycle comprising:
a detector (110) configured to detect a DC link voltage, a pedal speed and a wheel speed; and
an adjuster (120) configured to adjust at least one of a pedal torque and a wheel torque based on the pedal speed and the wheel speed, and configured to compare the detected DC link voltage with a target voltage, and further adjust at least one of the pedal torque and the wheel torque based on a voltage comparison result.

2. The pedal control device (10) of claim 1, wherein the adjuster (120) is configured to compare the pedal speed and the wheel speed and, if a difference between the pedal speed and the wheel speed is greater than a reference value, to output a first command current for adjusting the pedal torque and/or the wheel torque.

3. The pedal control device (10) of claim 1 or 2, wherein the adjuster (120) is configured to output a second command current to reduce the pedal torque, if the DC link voltage is greater than the target voltage.

4. The pedal control device (10) of any one of the preceding claims, wherein the adjuster (120) is configured to output a second command current to increase the pedal torque, if the DC link voltage is less than or equal to the target voltage.

5. The pedal control device (10) of any one of the preceding claims, wherein the adjuster (120) is configured to output a second command current to increase the wheel torque, if the DC link voltage is greater than the target voltage.

6. The pedal control device (10) of any one of the preceding claims, wherein the adjuster (120) is configured to output a second command current to reduce the wheel torque, if the DC link voltage is less than or equal to the target voltage.

7. The pedal control device (10) of any one of the preceding claims, wherein the adjuster (120) is configured to control the adjusted wheel torque to be less than or equal to a target wheel torque,
wherein the target wheel torque is a value of a power generated by the pedal divided by a wheel angular velocity.

8. A pedal control method for a chainless electric bicycle comprising:
a first adjustment step (S410) of detecting a pedal speed and a wheel speed, and adjusting at least one of a pedal torque and a wheel torque based on the pedal speed and the wheel speed; and
a second adjustment step (S420) of detecting a DC link voltage, comparing the detected DC link voltage with a target voltage, and further adjusting at least one of the pedal torque and the wheel torque based on a voltage comparison result.

9. The pedal control method of claim 8, wherein the first adjustment step (S410) comprises comparing (S510) the pedal speed and the wheel speed, and if a difference between the pedal speed and the wheel speed is greater than a reference value, outputting (S520) a first command current for adjusting the pedal torque.

10. The pedal control method of claim 8 or 9, wherein the first adjustment step (S410) comprises comparing (S510) the pedal speed and the wheel speed, and, if a difference between the pedal speed and the wheel speed is greater than a reference value, outputting (S520) a first command current for adjusting the wheel torque.

11. The pedal control method of any one of claims 8 to 10, wherein the second adjustment step (S420) comprises comparing (S610) the DC link voltage and the target voltage, and, if the DC link voltage is greater than the target voltage, outputting (S620) a second command current to reduce the pedal torque.

12. The pedal control method of any one of claims 8 to 11, wherein the second adjustment step (S420) comprises, comparing (S610) the DC link voltage and the target voltage, and, if the DC link voltage is less than or equal to the target voltage, outputting (S630) a second command current to increase the pedal torque.

13. The pedal control method of any one of claims 8 to 12, wherein the second adjustment step (S420) comprises, comparing (S610) the DC link voltage and the target voltage, and, if the DC link voltage is greater than the target voltage, outputting (S710) a second command current to increase the wheel torque.

14. The pedal control method of any one of claims 8 to 13, wherein the second adjustment step (S420) comprises, comparing (S610) the DC link voltage and the target voltage, and, if the DC link voltage is less than or equal to the target voltage, outputting (S720) a second command current to reduce the wheel torque.

15. The pedal control method of any one of claims 8 to 14, wherein the first adjustment step (S410) and/or the second adjustment step (S420) comprises controlling (S540) the adjusted wheel torque to be less than or equal to a target wheel torque, wherein the target wheel torque is a value of a power (Watt) generated by the pedal divided by a wheel angular velocity.
